# EUROPÄISCHE PATENTANMELDUNG

(11) **EP 4 663 527 A1**
(43) Veröffentlichungstag der Anmeldung: **17.12.2025**
(21) Anmeldenummer: 25179436.8
(22) Anmeldetag: 28.05.2025
(51) Int. Cl.: B62K 19/16, B62K 19/36

(54) **SATTELROHR SOWIE FAHRRADRAHMEN**

(30) Priorität: 14.06.2024 DE 102024116703
(71) Anmelder: Bayerische Motoren Werke Aktiengesellschaft, 80809 München (DE)
(72) Erfinder: Hogger, Thomas, 83624 Otterfing (DE); Eltrop, Raphael, 80807 München (DE); Jäger, Tim, 23909 Ratzeburg (DE); Nitzsche, Richard, 85653 Aying (DE); Pfitzer, Hanno, 84095 Furth (DE); Steinke, Ingo, 08359 Breitenbrunn (DE)

(57) **Zusammenfassung**

Sattelrohr zur Anordnung einer Sattelstütze, wobei das Sattelrohr eine Öffnung aufweist, und wobei das Sattelrohr im Bereich der Öffnung ein Zusatzelement aufweist, welches die Öffnung derart überragt, dass ein Überstand geformt ist, wobei angrenzend an die Öffnung ein Klemmelement angeordnet oder anordenbar ist, welches zum Zusammenwirken mit der Sattelstütze (40) und dem Überstand ausgelegt ist, wodurch eine in dem Sattelrohr angeordnete Sattelstütze arretiert werden kann.

## Beschreibung

Die vorliegende Erfindung betrifft ein Sattelrohr zur Anordnung einer Sattelstütze sowie einen Fahrradrahmen.

Sattelstützen werden in Sattelrohren üblicherweise mittels Reibschluss arretiert. Während dies bei Stahlrahmen in der Regel unmittelbar über das Sattelrohr möglich ist, werden bei Rahmen oder Sattelrohren aus Aluminium oder aus Verbundwerkstoffen oftmals separate Klemmelemente eingesetzt, wie beispielsweise in der DE 101 55 689 A1 gezeigt. Derartige Klemmelemente umschließen das Sattelrohr, welches beispielsweise geschlitzt ausgeführt ist, und ermöglichen so ein Arretieren der Sattelstütze. Abhängig vom Herstellungsverfahren des Sattelrohrs bzw. des Fahrradrahmens ist es aber manchmal nicht möglich, das Sattelrohr so zu gestalten, dass derartige Klemmelemente ohne Weiteres angeordnet werden können.

Es ist daher eine Aufgabe der vorliegenden Erfindung, ein Sattelrohr, sowie einen Fahrradrahmen anzugeben, wobei die bekannten Lösungen weiterentwickelt und insbesondere eine größere Fertigungsflexibilität ermöglicht werden soll.

Diese Aufgabe wird durch ein Sattelrohr gemäß Anspruch 1 sowie durch einen Fahrradrahmen gemäß Anspruch 13 gelöst. Weitere Vorteile und Merkmale ergeben sich aus den Unteransprüchen sowie der Beschreibung und den beigefügten Figuren.

Erfindungsgemäß weist ein Sattelrohr zur Anordnung einer Sattelstütze eine Öffnung auf, und wobei das Sattelrohr im Bereich der Öffnung ein Zusatzelement aufweist, welches die Öffnung derart überragt, dass ein Überstand geformt ist, wobei angrenzend an die Öffnung ein Klemmelement angeordnet oder anordenbar ist, welches zum Zusammenwirken mit der Sattelstütze und dem Überstand ausgelegt ist, wodurch eine in dem Sattelrohr angeordnete Sattelstütze arretiert werden kann. Mit Vorteil wirkt das Klemmelement mit dem Zusatzelement, insbesondere mit dessen Überstand, zusammen und nicht mit dem Sattelrohr selbst, wodurch zusätzliche Freiheitsgrade in Bezug auf dessen Formgebung und/oder die Materialwahl entstehen. Gemäß einer Ausführungsform sind das Sattelrohr und die Sattelstütze im Querschnitt rund, insbesondere kreisrund. Bevorzugt sind das Sattelrohr und die Sattelstütze nicht kreisrund, sondern aerodynamisch geformt, beispielsweise im Querschnitt eher elliptisch oder allgemein stromlinienförmig. Das Zusatzelement ist zweckmäßigerweise an die Form des Sattelrohrs (sowie der Sattelstütze) angepasst.

Das Zusatzelement sowie der Überstand können derart geformt sein, dass die Sattelstütze vollumfänglich oder annähernd vollumfänglich umschlossen ist. Grundsätzlich weist der Überstand zweckmäßigerweise zumindest einen Schlitz oder dergleichen auf, um eine gewisse Flexibilität/Elastizität bereitzustellen. Ein derartiger Schlitz erstreckt sich zweckmäßigerweise entlang oder im Wesentlichen entlang der Längsachse der Sattelstütze.

Bevorzugt umschließt das Zusatzelement die Sattelstütze oder das Sattelrohr nicht vollständig, sondern nur bereichsweise, beispielsweise zu einem Viertel oder einem Drittel oder annähernd bis zur Hälfte eines Umfangs der Sattelstütze. Zweckmäßigerweise umschließt das Zusatzelement die Sattelstütze in Umfangsrichtung also nicht vollständig. Die nicht komplette Umschließung ermöglicht beispielsweise die Verwendung eines Schiebers bei der Herstellung des Sattelrohrs. Mit Schiebern wird beispielsweise gearbeitet, wenn der Rahmen im Spritzguss erzeugt wird.

Die Sattelstütze weist eine Vorderseite und eine Rückseite auf. Die Vorderseite ist in Fahrtrichtung orientiert. Bevorzugt ist das Zusatzelement im Bereich der Rückseite angeordnet. Hierdurch kann eine längere Abstützung der Sattelstütze insbesondere im hoch belasteten, rückseitigen Bereich sichergestellt werden. Der vorgenannte Schieber des Werkzeugs ist beispielsweise so gestaltet, dass eine Formanlage im hinteren Bereich der Sattelstütze trotz Entformungsschräge möglich ist.

Bevorzugt ist das Sattelrohr aus einem Verbundwerkstoff gebildet/gefertigt, wobei das Zusatzelement ein Einlegeteil ist, welches bei der Herstellung des Sattelrohrs zumindest bereichsweise eingeformt oder eingebettet wird. Verbundwerkstoffe der in Rede stehenden Art sind insbesondere Faserverbundwerkstoffe. Diese umfassen verstärkende Fasern, welche in eine Matrix eingebettet sind. In diesem Bereich sind die unterschiedlichsten Herstellungsverfahren bekannt. Gemäß einer bevorzugten Ausführungsform ist das Sattelrohr bzw. der gesamte Rahmen im Spritzguss erzeugt. Bei diesem Fertigungsverfahren spielt es eine große Rolle, wie die Rahmen (und beispielsweise auch die Sattelstütze) gestaltet sind, da Entformungsschrägen vorgehalten oder Schieber ein- und ausgefahren werden müssen etc. Das vorliegende Zusatzelement wird zweckmäßigerweise im Spritzguss mit umspritzt. Hierbei ragt es im oberen Bereich aus dem Spritzgussmaterial/Sattelrohr heraus und formt den Überstand. Es ist hierbei mit Vorteil derart geformt, dass die Sattelstütze nur zur Hälfte umschlossen ist. Durch das Klemmelement kann die Sattelstütze mit dem Überstand des Zusatzelements durch Reibschluss verbunden werden.

Gemäß einer Ausführungsform weist das Zusatzelement einen ersten Abschnitt auf, welcher zur unmittelbaren Anlage an der Sattelstütze ausgelegt ist, und einen zweiten Abschnitt, welcher im Material des Sattelrohrs, zumindest abschnittsweise, bevorzugt vollständig, eingebettet ist. Der erste Abschnitt kontaktiert das Sattelrohr also mit Vorteil direkt oder unmittelbar, während der zweite Abschnitt im Material des Sattelrohrs eingebettet ist. Hierzu weitet sich das Zusatzelement entlang dessen Längsachse gesehen (also parallel zur Längserstreckung der Sattelstütze gesehen) beispielsweise auf (oder verengt sich, je nach Blickrichtung). Über die direkte Anlage kann eine besonders sichere Arretierung der Sattelstütze erreicht werden, insbesondere wenn der erste Abschnitt in seinem Kontaktbereich zur Sattelstütze eine entsprechende Oberflächeneigenschaft aufweist, wie eine speziell eingestellt Rauigkeit. Der erste Abschnitt formt zweckmäßigerweise zumindest den Überstand. Bevorzugt erstreckt sich der erste Abschnitt in das Sattelrohr hinein, formt also nicht nur den Überstand. Das Sattelrohr selbst wird zweckmäßigerweise über das Zusatzelement verstärkt, insbesondere über den zweiten Abschnitt, welcher mit Vorteil als ein das Sattelrohr verstärkendes Einlegelement wirkt.

Gemäß einer bevorzugten Ausführungsform weist das Zusatzelement eine oder mehrere Ausnehmungen auf. Derartige Ausnehmungen oder auch Durchbrechungen, welche in Form von Löchern, Schlitzen oder dergleichen ausgeführt sein können, ermöglichen einen besseren Formschluss mit dem Material des Sattelrohrs und damit eine stabilere Befestigung. Vorteilhaft ist dies insbesondere, wenn das Zusatzelement direkt bei der Herstellung des Sattelrohrs eingebracht oder eingebettet wird, wie dies beispielsweise bei einem Spritzgussverfahren der Fall sein kann.

Gemäß einer bevorzugten Ausführungsform ist das Zusatzelement ein Metallteil. Das Zusatzelement kann auch als Blechteil oder Blecheinleger bezeichnet werden. Derartige, metallische Zusatzelemente können relativ aufwandsarm hergestellt werden. Es kann vorteilhaft sein, zumindest den zweiten Abschnitt des Zusatzelements, gegebenenfalls aber auch den ersten Abschnitt, mit einer entsprechenden Beschichtung oder dergleichen zu versehen, um etwaige Wechselwirkungen mit dem Material des Sattelrohrs zu vermeiden. Das Zusatzelement kann auch aus einem nichtmetallischen Material oder einem Verbundwerkstoff gefertigt sein.

Bevorzugt weist das Klemmelement zur Arretierung eine Schraubverbindung auf. Das Klemmelement ist zweckmäßigerweise geschlitzt. Im Bereich des Schlitzes ist bevorzugt die Schraubverbindung vorgesehen. Unter einer Schraubverbindung wird vorliegend auch eine Schnellspanneinrichtung, wie der im Fahrradbereich bekannte Schnellspanner, verstanden.

Gemäß einer bevorzugten Ausführungsform ist das Klemmelement aus einem metallischen Werkstoff gebildet. Das Klemmelement ist beispielsweise aus einem Aluminiumwerkstoff gefertigt.

Zweckmäßigerweise weist das Klemmelement einen ersten Bereich und einen zweiten Bereich auf, wobei der erste Bereich zur unmittelbaren oder direkten Anlage an einer im Sattelrohr angeordneten Sattelstütze ausgelegt ist und der zweite Bereich zur unmittelbaren oder direkten Anlage an dem Überstand. Durch diese Ausgestaltung kann die Sattelstütze sicher fixiert werden. Zweckmäßigerweise ist es damit auch möglich, dass das Klemmelement mittelbar über den Überstand positioniert oder zentriert werden kann. Bei einer nicht runden Sattelstütze erfolgt die Positionierung des Klemmelements typischerweise von selbst. Bei einer kreisrunden Sattelstütze kann die Positionierung des Klemmelements mit Vorteil über das Zusatzelement oder dessen Überstand realisiert werden.

Die Erfindung richtet sich abschließend auch auf einen Fahrradrahmen, welcher ein erfindungsgemäßes Sattelrohr aufweist. Gemäß einer bevorzugten Ausführungsform ist der Fahrradrahmen im Spritzguss erzeugt. Es handelt sich also bevorzugt um einen Spritzgussrahmen. Ein derartiges Sattelrohr nebst Einlegeelement kann aber auch bei anders hergestellten Rahmen zum Einsatz kommen.

Weitere Vorteile und Merkmale ergeben sich aus der nachfolgenden Beschreibung einer Ausführungsform eines Sattelrohrs mit Bezug auf die beigefügten Figuren.

Es zeigen:
- Fig. 1:: eine Teilansicht einer Ausführungsform eines Sattelrohrs nebst Sattelstütze;
- Fig. 2:: den Schnitt A-A, wie in der Fig. 1 skizziert;
- Fig. 3:: den Schnitt B-B, wie in der Fig. 1 skizziert.

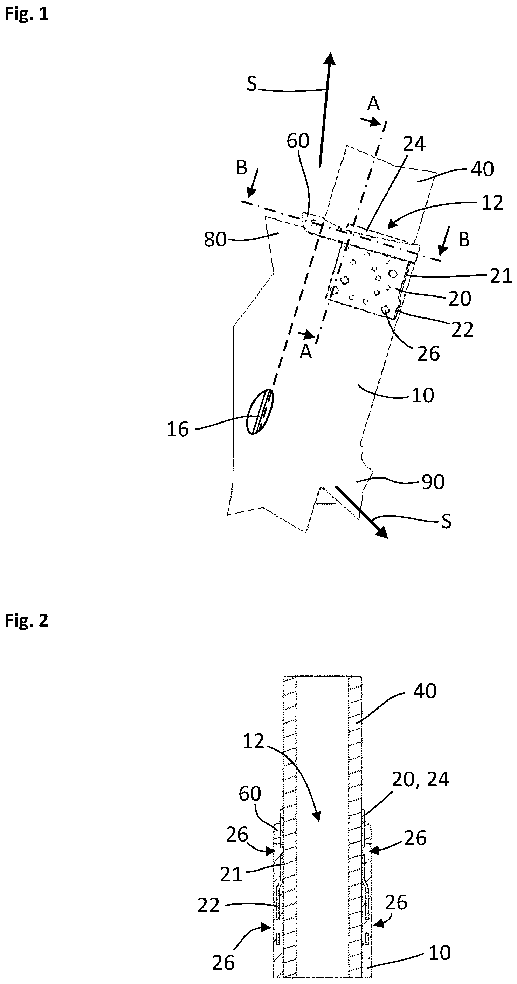

**Fig. 1** zeigt in einer Teilansicht ein Sattelrohr 10 eines Fahrradrahmens. Von dem Sattelrohr 10 erstrecken sich eine Sitzstrebe 90 sowie ein nur ansatzweise dargestelltes Oberrohr 80 weg. Das Sattelrohr 10 weist endseitig eine Öffnung 12 zur Anordnung einer Sattelstütze 40 auf. Im Bereich der Öffnung 12 weist das Sattelrohr 10 ein Zusatzelement 20 auf, welches in das Material des Sattelrohrs 10 eingebettet ist. Das Zusatzelement 20 formt einen Überstand 24, welcher die Öffnung 12 überragt und zum Zusammenwirken mit einem Klemmelement 60 ausgelegt ist, vergleiche diesbezüglich insbesondere auch die Figur 2. Zu erkennen ist weiter, dass das Zusatzelement 20 einen ersten Abschnitt 21 sowie einen zweiten Abschnitt 22 aufweist. Der erste Abschnitt 21 ist zur unmittelbaren oder direkten Anlage an der Sattelstütze 40 ausgelegt, während der zweite Abschnitt 22 gegenüber dem ersten Abschnitt 21 einen Versatz aufweist, insbesondere aufgeweitet ist. Dies ermöglicht eine bessere Einbettung des Zusatzelementes 20 in das Material des Sattelrohrs 10, vergleiche beispielsweise auch die Fig. 2. Der erste Abschnitt 21 sowie der zweite Abschnitt 22 sind vorwiegend "sichtbar" dargestellt. In der Realität ist nur der Überstand 24 des Zusatzelements 20 in dieser Ansicht erkennbar. Die mit dem Bezugszeichen S versehenen Pfeile deuten Bewegungsrichtungen hier weiter nicht dargestellter Schieber an, welche bei der Herstellung des Sattelrohrs 10, oder allgemeiner des entsprechenden Fahrradrahmens, verwendet werden. Der Rahmen, wie hier abschnittsweise skizziert, ist vorteilhafterweise im Spritzguss erzeugt. In Verlängerung der Sitzstrebe 90 weist das Sattelrohr 10 eine Abstützung 16 auf (das Sattelrohr 10 ist zu diesem Zweck teilweise offen bzw. im Schnitt gezeigt). Darüber kann mit Vorteil die Sattelstützte 40 geführt und abgestützt werden. Mit Vorteil kann eine derartige Abstützung über einen Schieber erzeugt werden, über welchen beispielsweise gleichzeitig die Sitzstrebe(n) 90 geformt wird oder werden, vgl. diesbezüglich auch die dort skizzierte Bewegungsrichtung S eines hier weiter nicht dargestellten Schiebers beim Entformen. Die Abstützung 16 kann auch als Teil oder Abschnitt des Sattelrohrs 10 verstanden werden, welcher allerdings über ein anderes Werkzeug (Schieber) erzeugt wird als das Sattelrohr 10 im oberen Bereich.

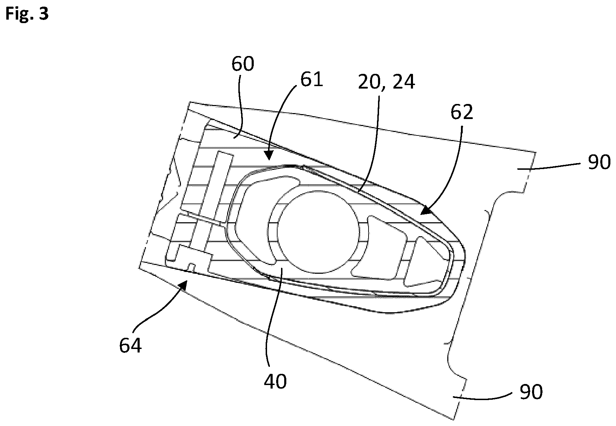

**Fig. 2** zeigt den in der Fig. 1 mit A-A gekennzeichneten Schnitt. Zu erkennen ist das Sattelrohr 10, in welchem die Sattelstütze 40 angeordnet ist. In das Sattelrohr 10 ist das Zusatzelement 20 eingebettet, wobei dessen erster Abschnitt 21 sowie dessen zweiter Abschnitt 22 deutlich zu erkennen sind. Der erste Abschnitt 21 liegt unmittelbar an der Sattelstütze 40 an, während der zweite Abschnitt 22 vollständig vom Material des Sattelrohrs 10 umgeben ist. Das Zusatzelement 20 weist mehrere Ausnehmungen 26 auf, welche einen Makroformschluss mit dem umgebenden Material ermöglichen. Angrenzend an die Öffnung 12 formt das Zusatzelement 20 den Überstand 24, an welchem das Klemmelement 60 anliegt, vergleiche diesbezüglich auch die Fig. 3.

**Fig. 3** zeigt den Schnitt B-B, wie in der Fig. 1 skizziert. Zu erkennen ist insbesondere das Klemmelement 60, welches einen ersten Bereich 61 sowie einen zweiten Bereich 62 aufweist. Der erste Bereich 61 ist zur unmittelbaren Anlage an der Sattelstütze 40 ausgelegt, während der zweite Bereich 62 zur unmittelbaren Anlage an dem Überstand 24 des Zusatzelements 20 ausgelegt ist. Die Sattelstütze 40 ist vorliegend nicht rund, insbesondere auch nicht kreisrund, sondern aerodynamisch geformt. Zu erkennen ist, dass das Zusatzelement 20 das Sattelrohr 10, welches in dieser Ansicht nicht zu erkennen ist, sowie die Sattelstütze 40 nur bereichsweise umschließt. Dies hat insbesondere Vorteile, wenn das Sattelrohr 10 über einen Schieber geformt werden soll, wie es beispielsweise bei einem Spritzgussrahmen der Fall sein kann, vgl. diesbezüglich auch die Bewegungsrichtung des entsprechenden (nicht dargestellten) Schiebers in Figur 1. Das Klemmelement 60 ist geschlitzt und weist in diesem Bereich eine Schraubverbindung 64 auf, über welche letztendlich die Klemmung/Arretierung der Sattelstütze 40 erreicht werden kann. Die Bezugszeichen 90 deuten auf die beiden Sitzstreben, welche sich in Richtung Hinterbau erstrecken.

### Bezugszeichenliste

- 10: Sattelrohr
- 12: Öffnung
- 14: Vorderseite
- 16: Rückseite
- 18: Abstützung
- 20: Zusatzelement
- 21: erster Abschnitt
- 22: zweiter Abschnitt
- 24: Überstand
- 26: Ausnehmung
- 40: Sattelstütze
- 60: Klemmelement
- 61: erster Bereich
- 62: zweiter Bereich
- 64: Schraubverbindung
- 80: Oberrohr
- 90: Sitzstrebe
- S: Bewegungsrichtung

## Patentansprüche

1. Sattelrohr (10) zur Anordnung einer Sattelstütze (40),
wobei das Sattelrohr (10) eine Öffnung (12) aufweist, und
wobei das Sattelrohr (10) im Bereich der Öffnung (12) ein Zusatzelement (20) aufweist, welches die Öffnung (12) derart überragt, dass ein Überstand (24) geformt ist,
wobei angrenzend an die Öffnung (12) ein Klemmelement (60) angeordnet oder anordenbar ist,
welches zum Zusammenwirken mit der Sattelstütze (40) und dem Überstand (24) ausgelegt ist, wodurch eine in dem Sattelrohr (10) angeordnete Sattelstütze (40) arretiert werden kann.

2. Sattelrohr nach Anspruch 1,
wobei das Zusatzelement (20) die Sattelstütze (40) nur bereichsweise umschließt.

3. Sattelrohr (10) nach Anspruch 1 oder 2,
wobei das Zusatzelement (20) in Umfangsrichtung gesehen vor einem maximalen Durchmesser des Sattelrohrs (10) endet.

4. Sattelrohr (10) nach einem der vorhergehenden Ansprüche,
wobei das Sattelrohr (10) eine Vorderseite (14) und eine Rückseite (16) aufweist, und
wobei das Zusatzelement (20) im Bereich der Rückseite (16) angeordnet ist.

5. Sattelrohr (10) nach einem der vorhergehenden Ansprüche,
wobei das Sattelrohr (10) aus einem Verbundwerkstoff gebildet ist, und
wobei das Zusatzelement (20) ein Einlegeteil ist, welches bei der Herstellung des Sattelrohrs (10) zumindest bereichsweise eingeformt wird.

6. Sattelrohr (10) nach Anspruch 5,
wobei das Sattelrohr (10) im Spritzguss erzeugt ist.

7. Sattelrohr (10) nach einem der vorhergehenden Ansprüche,
wobei das Zusatzelement (20) einen ersten Abschnitt (21) aufweist, welcher zur unmittelbaren Anlage an der Sattelstütze (40) ausgelegt ist, und einen zweiten Abschnitt (22), welcher im Material des Sattelrohrs (10), insbesondere vollständig, eingebettet ist.

8. Sattelrohr (10) nach einem der vorhergehenden Ansprüche,
wobei das Zusatzelement (20) eine oder mehrere Ausnehmungen (26) aufweist.

9. Sattelrohr (10) nach einem der vorhergehenden Ansprüche,
wobei das Zusatzelement (20) ein Metallteil ist.

10. Sattelrohr (10) nach einem der vorhergehenden Ansprüche,
wobei das Klemmelement (60) zur Arretierung eine Schraubverbindung aufweist.

11. Sattelrohr (10) nach einem der vorhergehenden Ansprüche,
wobei das Klemmelement (60) ein Metallteil ist.

12. Sattelrohr (10) nach einem der vorhergehenden Ansprüche,
wobei das Klemmenelement (60) einen ersten Bereich (61) und einen zweiten Bereich (62) aufweist,
wobei der erste Bereich (61) zur unmittelbaren Anlage an einer im Sattelrohr (10) angeordneten Sattelstütze (40) ausgelegt ist und der zweite Bereich (62) zur unmittelbaren Anlage an dem Überstand (24).

13. Fahrradrahmen, umfassend ein Sattelrohr (10) nach einem der vorhergehenden Ansprüche.
